# NEW EUROPEAN PATENT SPECIFICATION

(11) **EP 0 431 654 B2**
(45) Date of publication and mention of the opposition decision: **21.04.1999**
(45) Mention of the grant of the patent: 17.05.1995
(21) Application number: 90202738.2
(22) Date of filing: 15.10.1990
(51) Int. Cl.: H04B 10/16

(54) **Adapter for amplified optical lines**
Adapter für verstärkte optische Leitungen
Adaptateur pour lignes optiques amplifiées

(30) Priority: 30.10.1989 IT 2218589
(43) Date of publication of application: 12.06.1991
(73) Proprietor: PIRELLI CAVI E SISTEMI S.p.A., 20126 Milano (IT)
(72) Inventor: Grasso, Giorgio, I-20052 Monza (Milano) (IT); Tamburello, Mario, I-20059 Vimercate (Milano) (IT)
(74) Representative: Marchi, Massimo, Dr.

(56) References cited:
- US-A- 3 770 966
- US-A- 4 295 225
- US-A- 4 534 064
- US-A- 4 680 809
- FUJITSU SCIENTIFIC & TECHNICAL JOURNAL, vol.22, no. 4, Autumn 1986, pages 283-293, Kawasaki, JP; K. TOMIMORI et al.: "High-speed optical fiber communications"

## Description

The present invention relates to an adapter for amplified optical lines of the type comprising at least an optical line transmitting apparatus provided with a laser, and an optical line receiving apparatus between which the corresponding optical line amplifiers are interposed.

It is known that in the field of optical fiber telecommunication lines it appears very difficult to carry out the insertion in the line of optical amplifiers the parameters of which are compatible with the respective optical parameters used for planning the optical line transmitters and receivers.

This originates from the fact that the characteristics required from the optical line amplifier, that is transmission speed, wavelength and variation of the latter depending upon the working temperature, are different from those normally used by common optical line transmitting and receiving apparatuss.

More specifically, it would be necessary to design each time a particular circuit configuration, adapted to the parameters of the optical line amplifier and specific to the transmission speed of that line. In terms of operation, this means that it is necessary to make an electrical card in which the related parameters have been sized depending upon the specific transmission speed.

In addition, designed on the same card should also be the wavelength control circuits, depending upon the specific temperature still related to that optical line amplifier.

Moreover difficulties arise in carrying out the electrical connection to said electrical cards present in the transmitter and in the receiver, of the corresponding conversion circuit section arranged in the optical amplifiers when a given transmission speed threshold equal to 565 megabit is exceeded.

These types of problems as regards the laser representing the output of the optical transmitter and the corresponding input of the optical receiver related to the receiving apparatus, give also rise to a series of further restrictions dub to the fact that the circuitry currently present in transmitting and receiving apparatuss does not provide a circuit connection of the analog type for the service channels coupled in the same optical line.

In short, while in the course of studies and in currently experimented embodiments a circuit compactness criterion has been developed in order to limit the number of the components and make the interfacing cards mounted on the transmitting and receiving apparatuss of the optical fiber lines reliable, it is obvious that when optical line amplifiers have to be mounted on the line, said amplifiers are structurally incompatible with the circuitry normally present in the corresponding optical transmitting and receiving apparatuses, due to their operating parameters.

That is to say, when normal transmitting/receiving apparatuses are used, in the presence of optical amplifiers the signal on the optical line undergoes alterations greatly modifying the nature of the signal itself.

These restrictions represented by the above mentioned parameters also constrain to adopt a variety of circuit solutions each of them being exclusively limited to the selected operating parameters for that line and meeting the requirements of the optical line amplifiers present on the line itself.

This is mainly due to the peculiarly of the optical line amplifier which must work for given wavelength ranges, within given wavelength variation limits depending upon temperature, and for any value of the transmission speed.

In fact, as a result of the foregoing, normal optical line receivers have problems in the frequency response when they are coupled to optical amplifiers in optical fiber lines.

And just taking into account this series of difficulties due to the parametric restrictions and to the problems concerned with the electrical connections between the optical detector and the related circuitry of the optical line apparatuses, attempts have been first made to accomplish a number of solutions each offering determined parameters.

It appears obvious however that this method is very heavy as regards planning, very expensive and disadvantageous from an industrial point of view.

US-A-4 295 225 discloses an optical fiber repeater induding three stages, the first one is a photodetector stage, the second one is an amplification and pulse sharpening stage and the tird one is a driver stage for an optical source formed by an injection laser diode. The repeater converts an optical signal to electrical signal, amplifies the electrical signal and then re-converts the electrical signal to optical signal by means of the laser diode.

Said repeater has the task of regenerating optical signals in long distance optical fiber communications to overcome the inherent fiber attenuation and dispersions of the light power and to have at a receiving station an optical signal of good level.

The repeater generates an output optical signal having the same parametric features as the input optical signal, particularly the same wavelength, but with amplified intensity.

Therefore, the repeater does not generate an output optical signal having parametric features adjusted according to the parametric requirements of downstream optical components, as optical amplifiers.

The main object of the present invention is to eliminate the above drawbacks relative to the currently used solutions, by providing an adapter for amplified optical lines in which an independent and universal connection between the optical line amplifier and the corresponding transmitting and receiving apparatuses is possible without varying the internal circuitries of said apparatuses.

According to the invention, the above-mentioned object is attained by an adapter as defined in claim 1.

Advantageously, said device allows the normal transmitting and receiving apparatuses presently on the market to be used and, due to its compactness, ensures an easy construction and good reliability of the connection itself, also enabling the accomplishment of protection measures against failures in the apparatuses andlor amplifiers also In the field of optical fiber lines provided with amplifiers, which protection measures are normally provided in ordinary lines, although they are not of the optical fiber type.

Further features and advantages of the invention will be best understood from the detailed description of a preferred embodiment of an adapter for amplified optical lines given hereinafter by way of non-limiting example with reference to the accompanying drawings, in which:
- Fig. 1 is a general block diagram of an optical fiber line in particular showing the adapters connected to the respective transmitting and receiving apparatuses and to the corresponding optical line amplifiers, in accordance with the present invention;
- Fig. 2 is a block diagram specifically representing the adapter for amplified optical lines in accordance with the present invention, seen from the line transmitter side;
- Fig. 3 is a block diagram of the adapter of the invention seen from the receiver side;
- Fig. 4 shows a protection pattern for amplified optical lines using adapters in accordance with the invention;
- Fig. 5 is a block diagram of a further protection pattern for amplified optical lines using adapters in accordance with the invention.

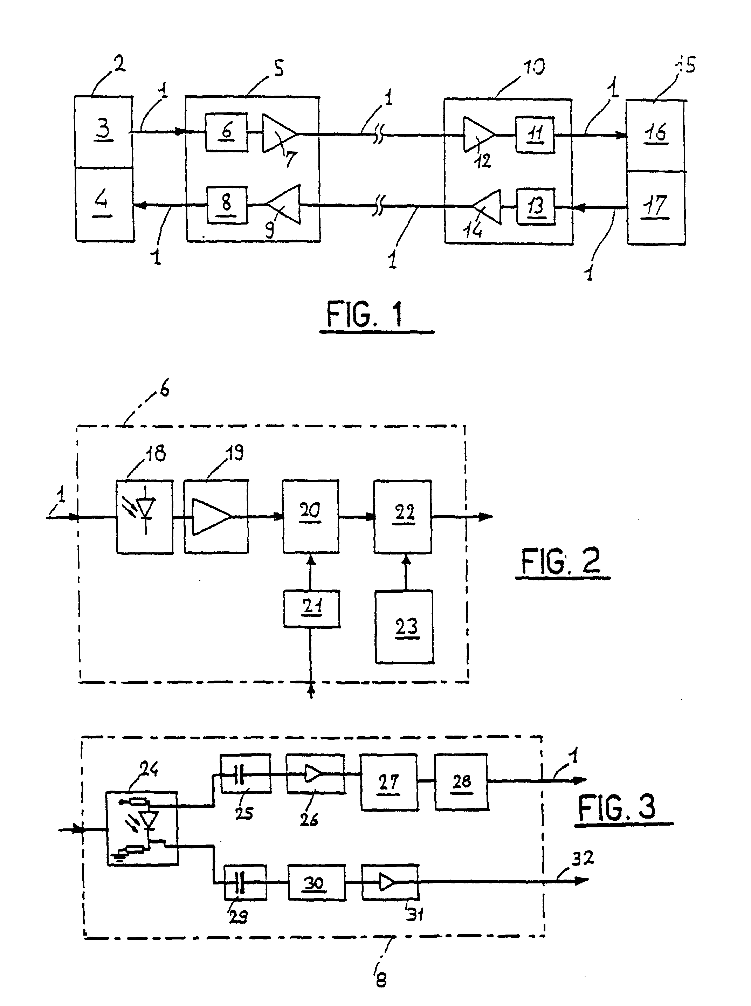

Referring to Fig. 1,1 denotes an optical fiber line in which a apparatus block 2 and a apparatus block 15 are present in each of them being possible to find a transmitting portion, 2 and 17 respectively, and a receiving portion, 4 and 16 respectively.

When optical amplifiers, represented by blocks 7, 9, 12 and 14 in the figure, need to be installed on the line it is convenient to mount, together with them, adapters In accordance with the present invention, represented in the figure by blocks 6, 8, 11 and 13 which are then gathered to form groups 5 and 10 for schematization purposes.

Obviously it is not necessary that each adapter 6 and the respective amplifier 7 for example, should be physically located together in the same housing; so the presence on the line of optical amplifiers variously disposed according to the line sizes is also possible.

Referring to Fig. 2 in which the adapter 6 has been shown from the transmitting side, we can draw therefrom that the optical signal coming from the transmitter 3 on the optical line 1 enters the adapter 6 through a photodetector 18 representing the input of the optical-to-electric converter module.

The output of photodetector 18, which can be a photodiode for example, originates an electrical signal entering an electrical automatic control amplifier 19, automatically controlling the voltage level within a determined range.

In this way an electrical energized signal is obtained at the output, the level of said signal corresponding to the input variations of the incoming optical signal.

Said electrical energized signal enters a laser piloting circuit 20, which in turn actuates a laser 22 converting said electrical signal to an optical signal, by selecting on said optical signal the wavelength of the optical signal generated by said piloting circuit.

The laser piloting circuit 20 is a circuit of the digital type in which also a direct current modulation is carried out in order to allow signals coming from the service channels 21 connected to the input to be inserted at the input thereof.

The resulting optical signal issued by laser 22 is controlled in wavelength through the control circuit 23, controlling the wavelength depending upon temperature, so as to ensure that the laser temperature is independent of the operating temperature of the line.

This control is of the analogic type and must comply with variations lower than one degree and essentially serves to control the peak wavelength meeting the parametric requirements of the optical line amplifier 7 to which the adapter 6 is connected through an optical connection.

The optical adapter has been shown in Fig. 3 from the receiving side 8 and therefore connected to the receiving apparatus 4.

Entering this adapter is the signal coming from the amplifier 9 which is converted by the photodetector 24 to the outputs of which are connected two circuit branches coupled each in alternating current through a capacitance represented in the respective branches by capacitor 25 and capacitor 29.

On the upper branch, where the coupling of capacitor 25 is located, the signal converted to electric undergoes an amplification through an electrical automatic control amplifier 26, automatically controlling the voltage level.

Optionally said amplification can also contemplate cascade amplifiers depending upon the level one wishes to achieve.

At the output of the amplifiers group 26 automatically controlling the voltage level, the electrical signal then enters a piloting circuit 27 of a laser 28.

Said piloting circuit is a mere analog circuit and serves to activate, according to a determined wavelength, the laser of ordinary type 28.

In this manner at the output there is an optical signal reflecting the input variations of the previously converted signal.

On the other branch coming out of the photodetector 24 with the alternating current coupler 29, a low-frequency filter 30 has been provided as well as a normal electrical amplifier 31 for analog connection to the service channels' connections 32.

Operation of the adapter according to the invention described above mainly as regards structure and also in the context in which it works, is as follows.

The characteristic feature in accordance with the present invention resides in that the signal entering the adapter 6 and the signal coming out of the same is always an optical signal which however reflects the parametric requirements of the corresponding optical amplifier 7 mounted on the optical line 1.

Obviously this remark is valid both at the transmission and at the reception and for each optical amplifier mounted on the optical line 1. When an optical signal is sent from the optical transmitting apparatus 3 through the optical fiber line 1, this signal enters the photodetector 18 of the adapter 6 and is converted to an electrical signal.

The electrical signal enters the automatic voltage level-controlling arnplifier 19 which allows the swings of the optical input signal to be followed, keeping appropriate output voltage levels.

The electrical signal activates the piloting circuit 20 for laser 22 which is a particular type of laser and which practically acts according to a selection of its own wavelength determined by the inherent inner configuration of laser 22 itself. circuit 20 is thoroughly digital and has a circuit portion carrying out a direct current modulation for the contemplated input of the signals coming from the so-called service channels and for which a gate must be arranged, that is an analog-type input.

The laser 22 of a selected wavelength then forms an optical output which has parametric characteristics independent of the laser of the line present in the transmitter 3 and also corresponds to the operating requirements of the optical line amplifier 7.

Obviously this optical signal has been also controlled through the control circuit 23 controlling the wavelength depending upon temperature, which carries out a fine-selection control for variations lower than one degree for a very restricted optical spectrum in the order of Angstrom.

This circuit works in analog and the laser present in block 22 must be a laser of a higher class if it is used in long-haul optical lines.

On the reception side the photodetector 24 acts as an optical-to-electric converter and, picking up the optical signal from the optical amplifier 9, converts it to an electrical signal then exhibiting two branches at the output, one of which, through an alternating current electrical coupling 25, follows the same procedure as the conversion portion present on the transmitter side of the conversion module 6 with blocks 18 and 19, that is, through the capacitor 25, allows the electric automatic tension level-controlling electric amplifier 26 which is energized to be coupled in alternating current, from which amplifier an electrical energized signal then comes out and follows the input variations of the corresponding optical signal.

This electrical signal enters a piloting circuit of laser 29 referenced by 27. This circuit, unlike its corresponding circuit on the transmission side, has a thoroughly analog circuitry, since it must carry out a type of selection different from the preceding one. In the same manner as before, the laser is of a type available on the market and does not contemplate any control concerning the variation of the wavelength defending upon temperature and the wavelength selection is not fine. At the output of this laser 28 there is an optical signal which, through the optical line 1, enters the receiving apparatus 4 out of which an electrical signal then comes.

On the other output branch of the adapter's photodetector 24, on the reception side thereof, there is another coupler 29 in alternating current which picks up at the input an optical signal converted by the photodetector 24 and makes itenteran electrical ordinary amplifier from which an electrical signal then issues which is connected to the service channels' connections through line 32.

This signal coming from the photodetector 24, after being coupled through the capacitor 29, is also provided with a low-pass filter referenced by 30 in figure 3 and designed to filter low frequencies.

In this way Independence has been reached from the parametric characteristics of the transmitting and receiving line apparatuses, since the adapter illustrated carries out the conversion to electrical of the signal in transit on the optical line through the appropriate processings as above stated while keeping the parametric characteristics thereof which are necessary for the operating requirements of optical amplifiers.

Thus the Invention attains the intended purposes.

In fact the foregoing remarks are valid for each optical line amplifier both on the transmission side and the reception side and allows the parameters thereof to be enhanced without being obliged to change the circuitry present in the optical transmitting and roceiving apparatuses, which optical apparatuses can be coupled to the amplifiers when the latter are mounted on the optical fiber lines without further modifications.

Advantageously provision is also made for protection solutions in case of failure which are always needed in the communication lines.

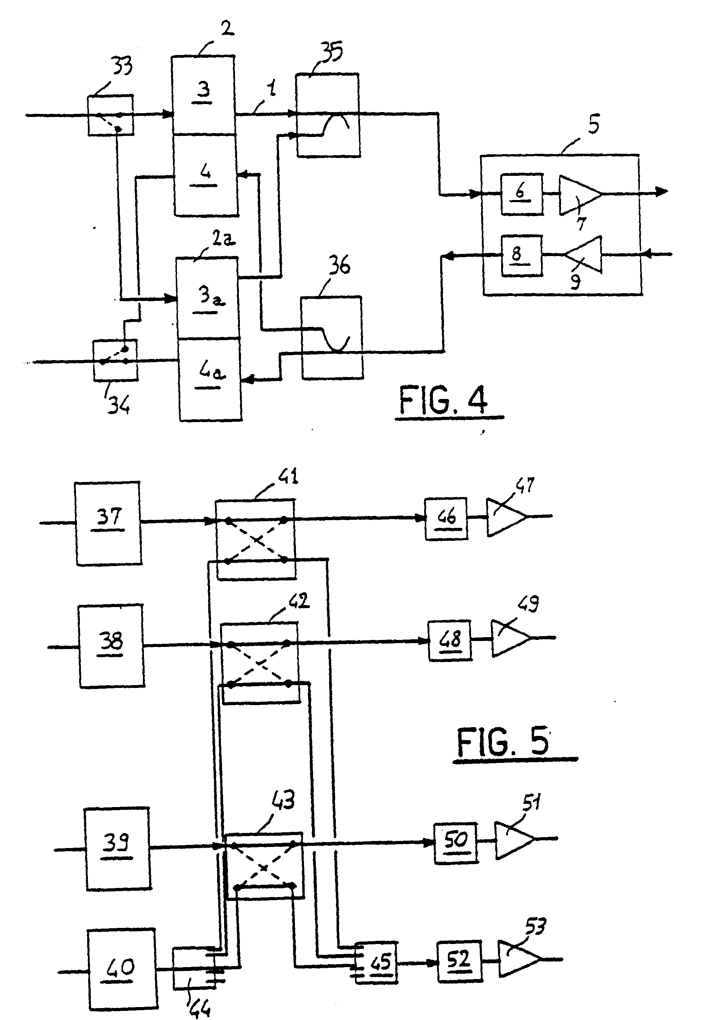

According to one form of protection shown in Fig. 4, in a single optical line it is possible to couple two apparatuses, referenced by 2 and 2a, in which the transmitting portion and the receiving portion identified by 3 and 4 and 3a and 4a respectively, are present, to an adapter block (generally identified by 5 for the sake of uniformity with the preceding figures) provided with the optical transmitting and receiving amplifiers 7 and 9 in the region of the respective adapters 6 and 8, through an optical coupler 35 on one side and another similar coupler 36 on the other side.

By suitable change-over switches, identified by 33 and 34 in the figure, it is possible to switch over a receiving/transmitting apparatus group when the other is out of work, by using the same line on which the optical amplifiers 7 and 9 are installed and merely switching over the switches 33 and 34 at the moment at which one of the two apparatuses goes out of work.

In greater detail, a transmitter 3 going out of work is deactivated by switching over the electrical switch 33 to the other side, either automatically or not, and subsequently using the optical coupler 35 so as to exploit the corresponding transmitter 3a of the apparatus 2a.

Likewise, it is possible to carry out the same reverse operation for the receivers.

In this way, it is possible to have a protection when a apparatus group goes out of work.

A further advantage is achieved by another configuration shown in Fig. 5, in which there is a number of transmitters 37, 38 and 39 optically coupled to optical amplifiers 47, 49 and 51 through adapters 46, 48 and 50 plus an additional transmitter 40 optically coupled to a further optical amplifier 53 through a further adapter 52.

In this manner too, as optical change-over switches 41, 42 and 43 are present, as well as an optical coupler 44 and a further optical coupler 45, it is possible to switch over any transmitter to the additional optical line In which the adapter group 52 and the corresponding amplifier 53 are present, when any line, the one on which the amplifier 47 with the adapter 46 is mounted for example, goes out of work

Likewise, it is possible to do the reverse operation when a transmitter goes out of work and it is needed to switch it over to another line with an optical amplifier and the respective adapter.

In short, there is a reciprocity criterion according to which whether it is a transmitter going out of work or the corresponding amplifier with the respective adapter, in accordance with the present invention when this happens it is possible to carry out the switching over to a line formally defined as the "nth" one (which in the figure has been represented by the line provided with apparatus 40 and amplifier 53 with the respective adapter 52).

The same criterion is valid as well when receiving apparatuses in optical lines are involved.

Obviously other variations and modifications concerning structure and parameters are possible, all of them falling within the inventive scope of the present invention.

## Claims

1. An adapter (6, 8, 11, 13) for amplified optical lines of the type comprising at least an optical line transmitting apparatus (3, 17) provided with a laser, and an optical line receiving apparatus (16, 4) between which the corresponding optical line amplifiers (7, 12, 9, 14) are interposed, said adapter having an optical fiber connection (1) both at the input and at the output, both on the transmitting apparatus side (3, 17) and on the receiving apparatus side (16, 4) wherein said adapter (6, 8, 11, 13) comprises a further laser (22) and one optical-to-electric converter module (18, 24) adapted to give an electrical signal at the output, the level of which corresponds to the input variations of the optical signal, said electrical signal entering a second adjustment module (20, 27) for said further laser, so as to generate an optical output signal having a selected wavelength adjusted according to the wavelength requirements of each optical line amplifier.

2. An adapter (6, 13) according to claim 1, characterized in that said first optical-to-electric converter module on the optical transmitting side (3, 17) exhibits an optical input consisting of a photodetector (18) for carrying out the optical-to-electric conversion of the signal coming from the transmitter itself, which photodetector (18), through a circuit connection, sends said electrical signal to an electrical automatic-control amplifier (19) automatically controlling the voltage level so that it may correspond to the variations of the optical input signal within determined ranges, then from said electrical amplifier being generated an energized signal which is sent to the second adjustment module.

3. An adapter (6, 13) according to claim 1, characterized in that said second adjustment module on the transmitting apparatus side (3, 17) comprises a piloting circuit (20) for a further laser (22), entered by the electrical signal coming from the electrical automatic voltage level-controlling amplifier (19) at the output of which an optical signal activating said laser (22) is generated, the optical signal of which is selected in wavelength, which wavelength is continuously controlled in time depending upon temperature variations by a corresponding control circuit (23) connected to said laser so as to control at each moment the peak wavelength of the laser according to the parametric requirements of the optical line amplifier.

4. An adapter (6, 13) according to claim 3, characterized in that said piloting circuit (20) for a further laser (22) contemplates the interconnection at the input thereof of number of service channels through corresponding analog circuit input gates (21).

5. An adapter (8, 11) according to claim 1, characterized in that said first optical-to-electric converter module on the receiving side (4, 16) exhibits an optical input consisting of a photodetector (24) for carrying out the optical-to-electric conversion of the signal coming from the corresponding optical line amplifier (9), which photodetector (24), through a circuit connection, sends said electrical signal to an electrical automatic-control amplifier (26) automatically controlling the voltage level so that it may correspond to the variations of the optical input signal within determined ranges, from said electrical amplifier (26) being then generated an energized signal which is sent to the second adjustment module.

6. An adapter (8, 11) according to claim 1, characterized in that said second adjustment module on the receiving apparatus side (4, 16) comprises a piloting circuit (27) for a further laser (28) available on the market, entered by the electrical signal coming from the electrical automatic voltage level-control amplifier (26) at the output of which an optical signal activating said laser (28) is generated, the optical signal of which is sent to the input of said receiving apparatus (4).

7. An adapter according to claim 1, characterized in that on the receiving side, at the output of the photodetector (24), a second circuit branch is provided which exhibits a low-frequency filter (30) and a further electrical amplifier (31) from which an electrical signal is emitted for an analog connection (32) to service channels.

8. An adapter according to claims 5 and 7, characterized in that the couplings between the photodetector (24) on the receiving side and the two corresponding circuit branches for the service channels and the optical output exhibit alternating current couplings, each represented by a capacitance (25, 29).

9. An adapter according to claim 1, characterized in that at least an adapter (6) for a transmitting apparatus (3) is provided with an optical connection at least to a transmitting apparatus (3a) through an optical coupler (35) so as to switch over the connection between said adapter and a different transmitting apparatus and vice versa.

10. An adapter according to claim 9, characterized in that at least a further optical coupler (36) is interposed between at least an adapter for a receiving apparatus (4) and at least a same receiving apparatus (4a).

11. An adapter (6, 8 and 11, 13) according to claim 1, characterized in that provision is made for an optical connection between two pairs of line transmitters/receivers (3, 17 and 16, 4) through two optical couplers (35, 36) the former being connected at the output to the transmitter (3) and the latter at the input to the receiver (4), as well as through two change-over switches (33, 34) one of which is located normally dosed on the transmitter (3) of the first pair and the other normally closed on the receiver (4a) of the second pair, said optical couplers (35, 36) being then in turn connected the former to the output of the second transmitter (3a) and the latter to the input of the first receiver (4), so that a pair of line transmitters/receivers (3, 4 and 3a, 4a) is able to intervene when one of them breaks down, switching over the changeover switch (33, 34) and still using the same adapter (6, 8 and 11, 13).

12. An adapter (46, 48, 50) according to claim 1, characterized In that provision is made for an optical connection with as many transmitters (37, 38, 39) plus an additional one (40) In turn connected to a further adapter (52) through an optical coupler (44) and an optical line coupler (45), each adapter (46, 48, 50, 52) being suitable to be switched over through a plurality of optical change-over switches (41, 42, 43), each connected in a normally closed condition to the respective transmitter (37, 38, 39) so as to be able to hold the connection even when a transmitter is out of work and vice versa.

## Patentansprüche

1. Adapter (6, 8, 11, 13) für verstärkte optische Leitungen des Typs, der mindestens eine mit einem Laser versehene Lichtleiter-Sendeapparatur (3, 17) und eine Lichtleiter-Empfangsapparatur (16, 4) aufweist, zwischen denen die entsprechenden Lichtleiterverstärker (7, 12, 9, 14) angeordnet sind, wobei der Adapter sowohl eingangs- als auch ausgangsseitig sowohl an der Sendeapparaturseite (3, 17) als auch an der Empfangsapparaturseite (16, 4) eine Lichtleiterverbindung (1) aufweist, wobei der Adapter (6, 8, 11, 13) einen weiterer laser (22) und ein optoelektrisches Konvertermodul (18, 24) aufweist, welches so eingerichtet ist, daß es am Ausgang ein elektrisches Signal bereitstellt, dessen Pegel den Variationen des optischen Eingangssignales entspricht und das in ein zweites Einstellmodul (20, 27) für den weiteren Laser geleitet wird, um ein optisches Ausgangssignal mit einer ausgewählten Wellenlänge zu erzeugen, das an die Wellenlängenerfordernisse jedes Lichtleiterverstärkers angepaßt ist.

2. Adapter (6, 13) nach Anspruch 1, dadurch gekennzeichnet, daß das erste optoelektrische Konvertermodul an der Seite des optischen Senders (3, 17) einen optischen Eingang aufweist, der aus einem Photodetektor (18) zur Ausführung der optoelektrischen Umwandlung des vom Sender kommenden Signals besteht, wobei der Photodetektor (18) über eine Schaltungsverbindung das elektrische Signal an einen selbsttätig regelnden elektrischen Verstärker (19) sendet, der automatisch den Spannungspegel derart regelt, daß er den Änderungen des optischen Eingangssignales innerhalb bestimmter Bereiche entspricht, wobei der elektrische Verstärker dann ein Signal erzeugt, welches an das zweite Einstellungsmodul gesandt wird.

3. Adapter (6, 13) nach Anspruch 1, dadurch gekennzeichnet, daß das zweite Einstellungsmodul an der Seite der Sendeapparatur (3, 17) eine Steuerschaltung (20) für einen weiteren Laser (22) aufweist, in die das vom automatischen Spannungspegel-Regelungsverstärker (19) kommende Signal eintritt und an deren Ausgang ein optisches Signal zur Aktivierung des Lasers (22) erzeugt wird, dessen optisches Signal wellenlängenselektiert ist, wobei die Wellenlänge zeitkontinuierlich in Abhängigkeit von Temperaturvariationen durch einen entsprechenden Regelkreis (23) geregelt wird, der mit dem Laser derart verbunden ist, daß er zu jedem Zeitpunkt die Peakwellenlänge des Lasers entsprechend den Parameteranforderungen des Lichtleiterverstärkers regelt.

4. Adapter (6, 13) nach Anspruch 3, dadurch gekennzeichnet, daß die Steuerschaltung (20) für einen weiteren Laser (22) an ihrem Eingang für die Beschaltung mit einer Anzahl von Bedienungskanälen durch entsprechende analoge Eingangsschaltungen (21) ausgelegt ist.

5. Adapter (8, 11) nach Anspruch 1, dadurch gekennzeichnet, daß das erste optoelektrische Konvertermodul an der Empfangsseite (4, 16) einen optischen Eingang aufweist, der aus einem Photodetektor (24) zur Durchführung der optoelektrischen Umwandlung des vom entsprechenden Lichtleiterverstärker (9) kommenden Signals besteht, wobei der Photodetektor (24) über eine Schaltungsverbindung das elektrisches Signal an den elektrischen automatischen Regelverstärker (26) sendet, der automatisch den Spannungspegel derart regelt, daß er innerhalb bestimmter Bereiche den Variationen des optischen Eingangssignales folgt, und von dem elektrischen Verstärker (26) dann ein Signal erzeugt und an das zweite Einstellungsmodul gesendet wird.

6. Adapter (8, 11) nach Anspruch 1, dadurch gekennzeichnet, daß das zweite Einstellungsmodul auf der Empfangsapparaturseite (4, 16) eine Steuerschaltung (27) für einen weiteren handelsüblichen Laser (28) aufweist, in das das von dem elektrischen automatischen Spannungspegel-Regelungsverstärker (26) kommende Signal eingespeist und an dessen Ausgang ein den Laser (28) aktivierendes optisches Signal erzeugt wird und das optische Signal des Lasers zum Eingang der Empfangsapparatur (4) gesandt wird.

7. Adapter nach Anspruch 1, dadurch gekennzeichnet, daß auf der Empfangsseite am Ausgang des Photodetektors (24) ein zweiter Schaltungszweig vorgesehen ist, der ein Niederfrequenzfilter (30) und einen weiteren elektrischen Verstärker (31) aufweist, von dem über eine analoge Verbindung (32) ein elektrisches Signal an Bedienungskanäle ausgesandt wird.

8. Adapter nach den Ansprüchen 5 und 7, dadurch gekennzeichnet, daß die Koppler zwischen dem Photodetektor (24) auf der Empfangsseite und den zwei entsprechenden Schaltungszweigen für die Bedienungskanäle und den optischen Ausgang Wechselstromkopplungen aufweisen, die jeweils durch eine Kapazität (25, 29) verkörpert werden.

9. Adapter nach Anspruch 1, dadurch gekennzeichnet, daß mindestens ein Adapter (6) für eine Sendeapparatur (3) vorgesehen ist mit einer optischen Verbindung mindestens zu einer Sendeapparatur (3a) über einen Optokoppler (35) die so beschaffen ist, daß es möglich ist, auf eine Verbindung zwischen dem Adapter und einer anderen Sende-Appartur umzuschalten und wieder zurückzuschalten.

10. Adapter nach Anspruch 9, dadurch gekennzeichnet, daß mindestens ein weiterer Optokoppler (36) zwischen mindestens einen Adapter für eine Empfangsapparatur (4) und mindestens eine gleiche Empfangsapparatur (4a) geschaltet ist.

11. Adapter (6, 8 und 11, 13) nach Anspruch 1, gekennzeichnet durch eine optische Verbindung zwischen zwei Paaren von Leitungssender/Empfängern (3, 17 und 16, 4) über zwei Optokopler (35, 36), von denen ein erster an den Ausgang des Senders (3) und ein zweiter an den Eingang des Empfängers (4) angeschlossen ist, und über zwei Umschalter (33, 34), von denen einer im Ruhezustand am Sender (3) des ersten Paares und von denen ein anderer im Ruhezustand am Empfänger (4a) des zweiten Paares liegt, wobei der erstere der beiden Optokoppler (35, 36) an den Ausgang des zweiten Senders (3a) und der zweite Optokoppler an den Eingang des ersten Empfängers (4) angeschlossen ist, so daß ein Paar von Leitungssendern/Empfängern (3, 4 und 3a, 4a) in der Lage ist einzugreifen, wenn eines von ihnen ausfällt, indem die Umschalter (33, 34) umschalten und dieselben Adapter (6, 8 und 11, 13) weiter benutzen.

12. Adapter (46, 48, 50) nach Anspruch 1, dadurch gekennzeichnet, daß eine optische Verbindung mit mehreren Sendern (37, 38, 39) plus einem zusätzlichen Sender (40) vorgesehen ist, der seinerseits mit einem weiteren Adapter (52) über einen optokoppler (44) und ein Lichtleiter-Verbindungselement (45) verbunden ist, wobei jeder Adapter (46, 48, 50, 52) über eine Anzahl von optischen Umschaltern (41, 42, 43), von denen jeder im Ruhezustand am entsprechenden Sender (37, 38, 39) liegt, geschaltet werden kann, so daß auch dann eine Verbindung aufrechterhalten wird, wenn ein Sender ausfällt, und auch ein Rückschalten möglich ist.

## Revendications

1. Adaptateur (6, 8, 11, 13) pour lignes optiques amplifiées du type comprenant au moins un appareil de transmission de lignes optiques (3, 17) équipé d'un laser, et un appareil de réception de lignes optiques (16, 4) entre lesquelles sont interposés les amplificateurs de lignes optiques (7, 12, 9, 14) correspondants, ledit adaptateur ayant une connexion pour fibres optiques (1) à la fois à son entrée et à sa sortie, à la fois du côté de l'appareil de transmission (3, 17) et du côté de l'appareil de réception (16, 4), où ledit adaptateur (6, 8, 11, 13) comprend un laser supplémentaire (22) et un module de conversion optique électronique (18, 24) agencé de manière à fournir un signal électrique à la sortie, dont le niveau correspond aux variations d'entrées du signal optique, ledit signal électrique étant envoyé dans un second module d'ajustement (20, 27) pour ledit laser supplémentaire, de manière à générer un signal optique de sortie ayant une longueur d'onde déterminée ajustée en fonction des spécifications de longueur d'onde de chaque amplificateur de lignes optiques.

2. Adaptateur (6, 13) selon la revendication 1, caractérisé en ce que le premier module de conversion optique électronique du côté de la transmission optique (3, 17) présente une entrée optique constituée par un photodétecteur (18) permettant de réaliser la conversion optique électronique du signal provenant du transmetteur lui-même, lequel photodétecteur (18), par l'intermédiaire d'un connecteur de circuit, envoit ledit signal électrique à un amplificateur électrique à commande automatique (19) commandant automatiquement le niveau de tension de sorte qu'il puisse correspondre aux variations du signal d'entrée optique à l'intérieur de plages déterminées, un signal excité étant ensuite généré à partir dudit amplificateur électrique, qui est envoyé au second module de réglage.

3. Adaptateur (6, 13) selon la revendication 1, caractérisé en ce que ledit second module de réglage du côté de l'appareil de transmission (3, 17) comprend un circuit de pilotage (20) pour un laser supplémentaire (22), auquel est envoyé le signal électrique provenant de l'amplificateur électrique de commande automatique du niveau de tension (19) à la sortie duquel est généré un signal optique excitant ledit laser (22), lequel signal optique est sélectionné en longueur d'onde, ladite longueur d'onde étant commandée de manière continue dans le temps en fonction de variation de température par l'intermédiaire d'un circuit de commande correspondant (23) relié audit laser de manière à commander à chaque instant la longueur d'onde maximale du laser selon les spécifications propres à l'amplificateur de lignes optiques.

4. Adaptateur (6, 13) selon la revendication 3, caractérisé en ce que ledit circuit de pilotage pour un laser supplémentaire (22) est en relation par son entrée avec l'interconnexion de plusieurs canaux de service par l'intermédiaire de portes d'entrées de circuit analogique (21).

5. Adaptateur (8, 11) selon la revendication 1, caractérisé en ce que ledit premier module de conversion optique électronique sur le côté récepteur (4, 16) présente une entrée optique constituée d'un photodétecteur (24) permettant de réaliser la conversion optique électrique du signal provenant de l'amplificateur de ligne optique (9) correspondant, lequel photodétecteur (24) par l'intermédiaire d'une liaison du circuit, envoit ledit signal électrique à un amplificateur électrique à commandes automatiques (26) commandant automatiquement le niveau de tension de sorte qu'il corresponde aux variations du signal d'entrée optique dans des plages déterminées, un signal excité étant alors généré à partir dudit amplificateur électrique (26) qui est envoyé au second module de réglage.

6. Adaptateur (8, 11) selon la revendication 1, caractérisé en ce que ledit second module de réglage du côté de l'appareil de réception (4, 16) comprend un circuit de pilotage (27) pour un laser supplémentaire (28) disponible sur le marché, auquel est transmis le signal électrique provenant de l'amplificateur électrique à contrôle automatique de niveau de tension (26), à la sortie duquel est généré un signal optique excitant ledit laser (28), ledit signal optique étant envoyé à l'entrée dudit appareil de réception (4).

7. Adaptateur selon la revendication 1, caractérisé en ce que du côté récepteur, à la sortie du photodétecteur (24), il est prévu une seconde branche de circuit qui présente un filtre passe bas (30) et un amplificateur électrique (31) supplémentaire à partir duquel est émis un signal électrique permettant une liaison analogique (32) vers canaux de service.

8. Adaptateur selon les revendications 5 et 7, caractérisé en ce que les couplages entre le photodétecteur (24) du côté récepteur et les deux branches de circuit correspondantes pour les canaux de service et la sortie optique, présentent des couplages de courant alternatif, chacun étant représenté par une capacité (25, 29).

9. Adaptateur selon la revendication 1, caractérisé en ce qu'au moins un adaptateur (6) pour un appareil de transmission (3) est équipé avec une liaison optique vers au moins un appareil de transmission (3a) par l'intermédiaire d'un coupleur optique (35), de manière à commuter la connexion entre ledit adaptateur et un appareil de transmission différent et vice-versa.

10. Adaptateur selon la revendication 9, caractérisé en ce qu'au moins un coupleur optique supplémentaire (36) est interposé entre au moins un adaptateur pour un appareil de réception (4) et au moins un appareil de réception analogue (4a).

11. Adaptateur (6, 8 et 11, 13) selon la revendication 1, caractérisé en ce qu'il est prévu une connexion optique entre deux paires de transmetteurs/récepteurs (3, 17 et 16, 4) en parallèle, par l'intermédiaire de deux coupleurs optiques (35, 36) le premier étant branché en sortie de l'émetteur (3) et le dernier étant branché en entrée du récepteur (4), ainsi que par l'intermédiaire de deux commutateurs (33, 34), dont l'un est situé en position normalement fermée sur le transmetteur (3) de la première paire et l'autre en position normalement fermée sur le récepteur (4a) de la seconde paire, lesdits coupleurs optiques (35, 36) étant ensuite alternativement branchés, le premier à la sortie du second transmetteur (3a) et le second à l'entrée du premier récepteur (4), de sorte qu'une paire de transmetteur récepteur (3, 4 et 3a, 4a) en parallèle, est capable d'intervenir lorsque l'un d'eux tombe en panne, actionnant le commutateur (33, 34) et continuant à utiliser le même adaptateur (6, 8 et 11, 13).

12. Adaptateur (46, 48, 50) selon la revendication 1, caractérisé en ce qu'il est prévu une connexion optique avec autant de transmetteurs (37, 38, 39) ainsi qu'un additionnel (40) alternativement branché à un adaptateur supplémentaire (52) par l'intermédiaire d'un coupleur optique (44) et un coupleur de ligne optique (45), chaque adaptateur (46, 48, 50, 52) étant agencé de manière à pouvoir être commuté par l'intermédiaire d'une pluralité de commutateurs optiques (41, 42, 43) dont chacun est branché dans un état normal de fermeture au transmetteur respectif (37, 38, 39) de manière à pouvoir maintenir la connexion même lorsque un transmetteur est hors service et vice-versa.
